Europäisches Patentamt

European Patent Office

Office européen des brevets

(19)

(11) Veröffentlichungsnummer: **0 086 379**
**B1**

(12) # EUROPÄISCHE PATENTSCHRIFT

(45) Veröffentlichungstag der Patentschrift:
14.05.86

(21) Anmeldenummer: 83100808.1

(22) Anmeldetag: 28.01.83

(51) Int. Cl.⁴: **B 23 B 41/02,** B 23 Q 3/155,
B 23 Q 11/10

(54) Werkzeugwechsler.

(30) Priorität: 11.02.82 DE 3204789

(43) Veröffentlichungstag der Anmeldung:
24.08.83 Patentblatt 83/34

(45) Bekanntmachung des Hinweises auf die Patenterteilung:
14.05.86 Patentblatt 86/20

(84) Benannte Vertragsstaaten:
AT BE CH DE FR GB IT LI LU NL SE

(56) Entgegenhaltungen:
DE - A - 1 602 890
DE - A - 1 913 231
DE - A - 2 215 306
DE - A - 2 345 050
DE - A - 2 921 961
DE - U - 8 012 959
SU - A - 506 469
US - A - 4 032 163
US - A - 4 032 163
US - A - 4 080 090

(73) Patentinhaber: TBT Tiefbohrtechnik GmbH und Co. KG.,
Siemensstrasse 1, D-7433 Dettingen (DE)

(72) Erfinder: Armbruckner, Otto, Im Rain 8/2,
D-7434 Riederich (DE)

(74) Vertreter: Dreiss, Uwe, Dr. jur. Dipl.-Ing. M.Sc. et al,
Patentanwälte Dreiss, Hosenthien & Fuhlendorf
Gerokstrasse 6, D-7000 Stuttgart 1 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Werkzeugwechsler für eine Tiefbohrmaschine mit einer drehangetriebenen Werkzeugspindel und einem Aufnahmeteil, das eine konische Innenfläche aufweist, in die der konische Schaft einer zur Aufnahme eines Tiefbohrwerkzeugs mit Innenkanal bestimmten Werkzeugaufnahme einsteckbar ist, und bei der im Aufnahmeteil Spanneinrichtungen vorgesehen sind, die am Schaft der Werkzeugaufnahme eingreifen und unter dem Druck einer Feder auf diese in axialer Richtung einwirken, und bei dem die Werkzeugaufnahme sowie ein innerhalb der Werkzeugspindel angeordnetes und sich mit dieser mitdrehendes zur Zu- und Ableitung von Kühl- und/oder Schmiermittel dienendes Rohr Innenkanäle aufweisen, die miteinander in Verbindung stehen.

Ein derartiger Werkzeugwechsler ist aus der DE-OS 29 21 961 bekannt. Die Spanneinrichtungen werden durch in einem Spannkäfig angeordnete Kugeln gebildet, die gegen einen Bund am Schaft der Werkzeugaufnahme drücken; dabei ist der Spannkäfig mit einer Spannstange integral ausgebildet, die durch ein Paket Tellerfedern in Spannstellung gezogen wird. Dabei stützen sich die Tellerfedern an einem mit der Werkzeugspindel verbundenen Stützarm ab. Die Verbindung der Innenkanäle in der Werkzeugaufnahme und in dem zur Zu- und Ableitung von Kühl- und/oder Schmiermittel dienenden Rohr erfolgt dabei durch teleskopartige Leitungsverbindungen.

Nachteilig ist bei einem derartigen Aufbau des Werkzeugwechslers, dass die Spanneinrichtungen – gebildet durch die Kugeln – in Folge von kleinsten Bearbeitungsungenauigkeiten der Kugeln, des sie führenden Spannkäfigs und des Bundes an der Werkzeugaufnahme, auf den sie einwirken, nicht alle gleichmässig Kraft auf die Werkzeugaufnahme ausüben. Es zeigt sich in der Praxis bei dieser oder ähnlicher Ausbildung des Werkzeugwechslers, auch wenn man statt der Kugeln andere Spanneinrichtungen, etwa Klauen gemäss der DE-OS 16 02 890 verwendet, dass bei dieser Art Spannung über ein gemeinsames Spannelement (bei der DE-OS 29 21 961; Spannstange 22; bei der DE-OS 16 02 890: Bund 88) stets nur einige der Spanneinrichtungen die gesamte Spannkraft aufnehmen, während andere an dem Spannvorgang nicht beteiligt sind.

Ausserdem sind die in der DE-OS 29 21 961 nicht näher erläuterten telekopartigen Leitungsverbindungen relativ kompliziert aufgebaut und ermöglichen keine einfache und sichere Abdichtung bei automatischem Werkzeugwechsel.

Beim automatischen Werkzeugwechsel besteht generell die Schwierigkeit darin, die Innenkanäle zuverlässig schnell und einfach miteinander abdichtend zu verbinden, während die das Tiefbohrwerkzeug fest aufnehmende Werkzeugaufnahme in einen entsprechenden Aufnahmeteil an der Werkzeugspindel aufgenommen werden muss.

Aufgabe der Erfindung ist es demgemäss, einen Werkzeugwechsler der eingangs genannten Art zu schaffen, der bei einfachem konstruktiven Aufbau ein rasches Wechseln des Tiefbohrwerkzeuges bei sicherem Anschluss der Innenkanäle für die Zuleitung bzw. Ableitung des Kühl- und/oder Schmiermittels gewährleistet. Dabei soll insbesondere ein schneller Wechsel durch einfache Manipulation eines Teiles (Greifers) einer automatischen Werkzeugmaschine möglich sein.

Diese Aufgabe wird erfindungsgemäss dadurch gelöst, dass die Spanneinrichtungen als im Aufnahmeteil verschwenkbare und in eine Nut am Schaft der Werkzeugaufnahme eingreifende Klauen ausgebildet sind, die Schrägflächen aufweisen und durch im Aufnahmeteil axial verschiebbare Keile, die ebenfalls Schrägflächen aufweisen, in Spannstellung gedrückt werden, wobei durch Anliegen der Schrägflächen aneinander eine Verriegelung durch Selbsthemmung eintritt, und dass jedem Keil einzeln eine im Aufnahmeteil abgestützte Feder zugeordnet ist, und dass ferner das in der Werkzeugspindel mitdrehend angeordnete Rohr durch eine weitere Feder gegen die Werkzeugaufnahme gedrückt wird, und dass ferner eine Einrichtung zum Lösen der Selbsthemmung der Keile durch Verschiebung derselben in axialer Richtung gegen die Kraft der genannten Feder vorgesehen ist. Die Erfindung betrifft ferner mehrere vorteilhafte Weiterbildungen.

Der Aufbau des erfindungsgemässen Werkzeugwechslers ist erheblich einfacher als beim eingangs genannten Stand der Technik. So kann insbesondere die dort genannte Schubstange (Bezugszeichen 15) wegfallen und demgemäss auch der Aufnahmeteil einfacher und stabiler ausgebildet werden. Die Spanneinrichtungen werden durch Klauen gebildet, die durch einzelne federbelastete Keile durch Selbsthemmung in Spannstellung gehalten werden. Es ergibt sich damit eine gleichmässige Verteilung der Spannkraft auf sämtliche Klauen. Bei dieser Spannung des Werkzeuges kann in besonders einfacher Weise auch die Werkzeugaufnahme stirnseitig gegen das Kühl- und/oder Schmiermittel führende Rohr angedrückt werden. Um ein sicheres Anliegen zu gewährleisten, ist Bestandteil der Erfindung, dass dieses Rohr unter Federdruck steht. Dies wird ermöglicht, weil – in Abweichung von dem Stand der Technik etwa gemäss DE-OS 29 21 961 – dieses Rohr bei der Spannung der Werkzeugaufnahme keine Funktion zu erfüllen hat, während es bei dem genannten Stand der Technik sowohl Spannstange als auch Kühl- und/oder Schmiermittelleitung ist. Die beim Stand der Technik verwendeten teleskopartigen Leitungsverbindungen können wegfallen.

Ausführungsbeispiele der Erfindung werden im folgenden anhand der beigefügten Zeichnungen beschrieben. Es stellen dar:

Figur 1 ein erstes Ausführungsbeispiel;

Figur 2 eine schematische Darstellung der Schaltgabel in einer Ebene senkrecht zur Ebene von Figur 1;

Figur 3 ein zweites Ausführungsbeispiel.

Das Tiefbohrwerkzeug 1 weist einen Innenkanal 2 auf. Der Innenkanal 2 dient bei dem sog.

Einlippen-Bohrverfahren zur Zufuhr des Kühlmittelschmierstoffes an die Schneide des Werkzeuges, die an dem in der Figur linken (nicht gezeigten) Ende des Tiefbohrwerkzeugs 1 sitzt. Beim sog. BTA-Verfahren wird der Kühlschmierstoff aussen, am Umfang des Werkzeugs, zugeführt und zusammen mit den Spänen über den Innenkanal 2 abgeführt. Das in der Zeichnung dargestellte Ausführungsbeispiel hat ein Tiefbohrwerkzeug nach diesem BTA-Verfahren zum Gegenstand; über den Innenkanal 2, der sich durch die gesamte Spindel hindurch fortsetzt, wird Kühlschmierstoff zusammen mit den Spänen von links nach rechts abgeführt und tritt dann schliesslich, wie in der Figur rechts durch den Pfeil angedeutet, aus der Spindel aus.

Das Tiefbohrwerkzeug sitzt fest in einer Hülse 3. Dies ist z.B. dadurch erreicht, dass die Hülse 3 auf das Tiefbohrwerkzeug 1 aufgelötet oder aufgeschraubt wird. Der linke Bereich der Hülse 3 ist mit einem Aussengewinde 4 versehen. Auf diesem Aussengewinde 4 sitzt eine Anschlagmutter 5. Ihre Stellung definiert die Lage der Werkzeugaufnahme 6 relativ zur Hülse 3. Die Werkzeugaufnahme 6 ist mit der Hülse 3 dadurch verbunden, dass ein Keil 8 sowohl in die Nut 7 in der Werkzeugaufnahme 6 als auch in eine Nut 7' in der Hülse 3 eingreift. Diese Verbindung ist mehrfach entlang des Umfangs vorgesehen. Am linken manschettenartigen Ende 9 der Werkzeugaufnahme 6 ist ebenfalls ein Aussengewinde vorgesehen, auf dem eine Überwurfmutter 10 angeordnet ist. Wird sie angezogen, so ist die Werkzeugaufnahme 6 in derjenigen Lage gegenüber der Hülse 3 fixiert, die durch die Lage der Anschlagmutter 5 auf dem Aussengewinde 4 bestimmt wird. Der Innenkanal 2 setzt sich fort in den Innenkanal 11 in der Hülse 3, den Innenkanal 12 in der Werkzeugaufnahme 6 und den Innenkanal 58 im Rohr 52. Das Rohr 52 ist in der Werkzeugspindel 22 federnd angeordnet.

Tiefbohrwerkzeug 1 und Werkzeugaufnahme 6 bilden eine Einheit 13, die als solche im Rahmen einer Werkzeugmaschine an der Werkzeugspindel (Bohrspindel) automatisch auswechselbar sein soll. Automatische Auswechselbarkeit bedeutet, dass ein Greifer (nicht gezeigt) die Einheit fasst (z.B. durch Eingreifen in die Nut 14 an der Werkzeugaufnahme 6) und sie in den Werkzeugwechsler einfach einsetzt bzw. herausnimmt. Hierzu dient der konische Schaft 15 der Werkzeugaufnahme 6. Die Drehmomentübertragung erfolgt durch Mitnahmesteine 59.

Zur Aufnahme der Einheit 13 an der Werkzeugspindel 22 wird die Werkzeugaufnahme 6 in die konische Innenfläche 16 des Aufnahmeteils 17 (Aufnahmekonus) gesteckt, der Teil des Werkzeugadapters 18 ist.

Der Werkzeugadapter 18 weist den Aufnahmeteil 17 und einen Flansch 19 auf, die mittels Schrauben 20 verbunden sind. Der Flansch 19 ist in Drehrichtung durch Mitnahmesteine 21 mit der Werkzeugspindel 22 gekoppelt, die in bekannter Weise angetrieben wird (nicht gezeigt). Die Mitnahmesteine greifen in entsprechende Nuten in den Adapterzylinder 19 und in der Werkzeugspindel 22 ein.

Der Aufnahmeteil 17 ist entlang seines Umfanges mit mehreren Schlitzen versehen. Davon sind die Schlitze 17' und 17'' ersichtlich. In diesen Schlitzen sind mittels Bolzen 23 Klauen 24 schwenkbar gelagert. In der gezeigten Stellung (Spannstellung) greifen die Klauen in eine Nut 25 ein, die an dem sich nach rechts erstreckenden nabenartigen Ansatz 26 der Werkzeugaufnahme 6 vorgesehen ist. In Spannstellung verlaufen die Rückflanken 27 der Klauen 24 nicht parallel zur Achse des Werkzeugwechslers, sondern schräg unter einem bestimmten Winkel dazu. An der Schrägflanke 27 der Klauen 24 liegen Keile 28 an. Die Klauen 24 und die Keile 28 sind so aufeinander abgestimmt, dass sie in Spannstellung selbsthemmend sind und nur mit einer von aussen eingeleiteten Kraft zu entspannen sind. Somit wird durch den Eingriff der Klauen 24 in die Nut 25 die Werkzeugaufnahme 6 an der Werkzeugspindel 22 gehalten, da die Klauen 24 am Aufnahmeteil 17, der Aufnahmeteil 17 am Flansch 19, und der Flansch 19 an der Werkzeugspindel 22 gehalten ist.

In den Keilen 28 stecken Stehbolzen 30. Über sie sind Federn 31 gesteckt, die im Aufnahmeteil 17 in Ausnehmungen 32 abgestützt sind. Diese Federn drücken die Keile 28 in die dargestellte Spannstellung.

Innerhalb des Flansches 19 ist ferner eine Schiebemuffe 33 angeordnet. Bestandteil dieser Schiebemuffe 33 ist eine Austreiberhülse 34. Das linke Ende 50 der Austreiberhülse 34 erstreckt sich in den Raum zwischen den Klauen 24 bis zum Einschnitt 51 am konischen Schaft 15 der Werkzeugaufnahme 6. Ferner weist die Schiebemuffe 33 Anschlagflächen 35 auf, mit denen die Schiebemuffe 33 gegen das rechte Ende der Keile 28 drückt. Mittels Hülsen 36 und Schrauben 37 ist die Schiebemuffe 33 mit einer Schiebehülse 38 verbunden. Die Hülsen 36 und die Schrauben 37 erstrecken sich durch einen Schlitz 39 im Flansch 19 hindurch. Auf diese Weise ist also die Schiebemuffe 33 bewegungsmässig bei einer Verschiebung in axialer Richtung mit der Schiebehülse 38 verbunden.

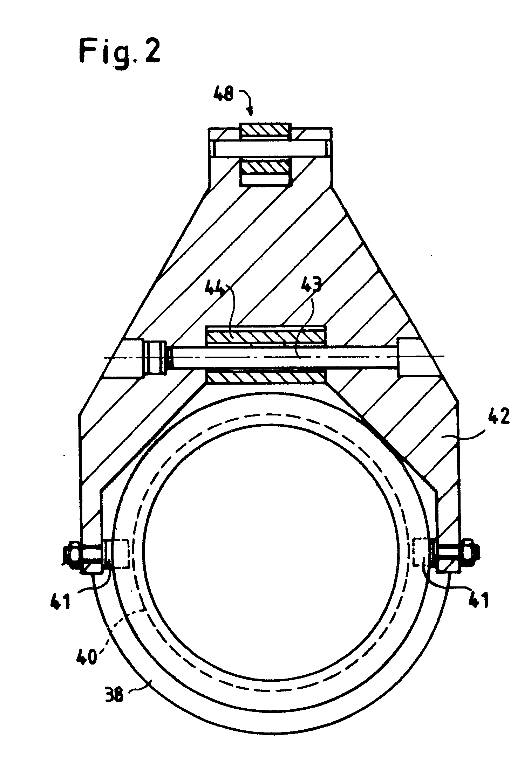

Zur Verschiebung der Schiebehülse 38 weist diese eine umlaufende Nut 40 auf. In dieser Nut greifen zu beiden Seiten Klauen 41 ein (vgl. Figur 2). Diese Klauen sind an einer Schaltgabel 42 angeordnet, die mit Hilfe eines Bolzens 43 an einem Ausleger 44 befestigt ist, der seinerseits mit dem Spindelgehäuse 45 fest verbunden ist. Die Bewegung der Schaltgabel 42 erfolgt mit Hilfe eines hydraulischen Zylinders 46, dessen Kolbenstange 47 am oberen Ende der Schaltgabel 42 bei 48 angreift.

Die Entriegelung der Einheit 13 geht nun folgendermassen vor sich:

Der hydraulische Zylinder 46 wird so betätigt, dass sich die Kolbenstange 47 und mit ihr das obere Ende der Schaltgabel 42 nach rechts bewegt. Dann wird die Schiebehülse 38 nach links verschoben. Da sie über Hülsen 36 und Schrauben 37 mit der Schiebemuffe 33 verbunden ist, bewegt sich auch diese nach links.

Das bedeutet, erstens, dass die Anschlagflächen 35 die Keile 28 nach links verschieben. Somit werden die Rückflanken 27 der Klauen 24 freigegeben. Die Klauen 24 können sich nun in radialer Richtung nach aussen schwenken. Zweitens bewegt sich mit der Schiebehülse 38 und der Schiebemuffe 33 auch die Austreiberhülse 34 nach links und trifft auf den Radius 49 der Klauen 24. Dies erzwingt die Schwenkbewegung der Klauen 24 nach aussen. Die Klauen 24 bewegen sich also aus der Nut 25 der Werkzeugaufnahme 6 heraus und geben sie damit frei. Diese Bewegung geht so lange weiter, bis das linke vordere Ende 50 der Austreiberhülse 34 mit ihrer Stirnfläche an dem Einschnitt 51, der einen Anschlag bildet, anschlägt. Durch dieses Anschlagen wird die Werkzeugaufnahme 6 im Aufnahmeteil 17 bzw. in deren konischer Ausnehmung 32 freigeschlagen. Die Schiebemuffe 33 mit Austreiberhülse 34 fährt soweit, bis die Austreiberhülse an der konischen Fläche der Ausnehmung 32 des Aufnahmeteils 17 anliegt und somit den Raum, in dem die Klauen 24 und die Keilstücke 28 angeordnet sind, gegen ein Eindringen von Spänen usw. abdichtet.

In dieser entriegelten Position kann also die Werkzeugaufnahme 6 durch einen Greifer etc. aus dem Eingriff mit dem Aufnahmeteil 17 des Werkzeugadapters herausbewegt werden. Ein weiteres Werkzeug kann eingesetzt werden.

Das Spannen erfolgt dadurch, dass der hydraulische Schaltzylinder 46 die Kolbenstange 47 nach links verschiebt. Demgemäss verschiebt sich die Schiebemuffe 38 nach rechts. Dann werden die Keilstücke 28 durch die Federn 31 ebenfalls nach rechts gedrückt. Somit drücken dann wieder die schrägen Flächen 29 der Keilstücke 28 gegen die Rückflanken 27 der Klauen 24 und halten diese somit radial nach innen in der Position, in der zwischen beiden Selbsthemmung gegeben ist und der Werkzeugadapter gespannt ist.

Die Abfuhr des Kühlschmierstoffes beim BTA-Verfahren (bzw. die Zufuhr desselben beim Einlippen-Bohrverfahren) erfolgt, wie bereits erwähnt, über den Innenkanal 2 des Tiefbohrwerkzeugs 1 sowie daran anschliessend über den Innenkanal 12 der Werkzeugaufnahme 6. Der Innenkanal 12 der Werkzeugaufnahme 6 schliesst bündig ab mit dem Innenkanal 58 des unter Federbelastung stehenden Rohres 52. An diesem Rohr ist mit Hilfe von zwei Seeger-Ringen 53 ein Bund 54 angebracht. Zwischen dem Bund 54 und einem Anschlag 55 in der Werkzeugspindel 22 ist eine Feder 56 angebracht, die den Bund 54 und damit das Rohr 52 nach links drückt, so dass die linke Stirnkante des Rohres gegen die rechte Stirnkante der Werkzeugaufnahme 6 drückt und dort eine Dichtung bildet. Beim Werkzeugwechsel wird die Bewegung des Rohres und damit des Bundes 54 nach links durch einen Stift 57 begrenzt, der in der Werkzeugspindel 22 angeordnet ist.

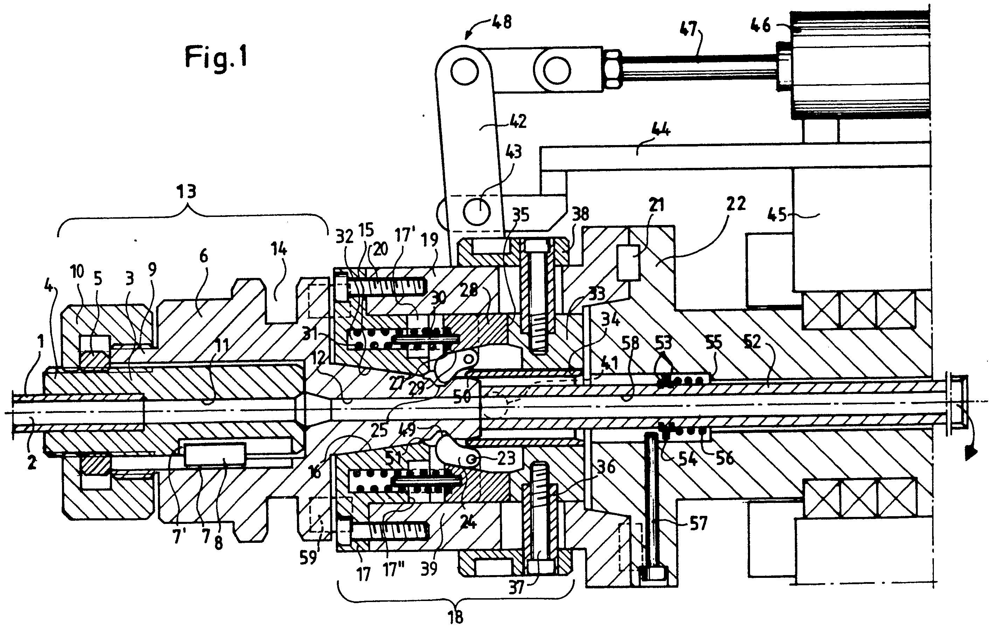

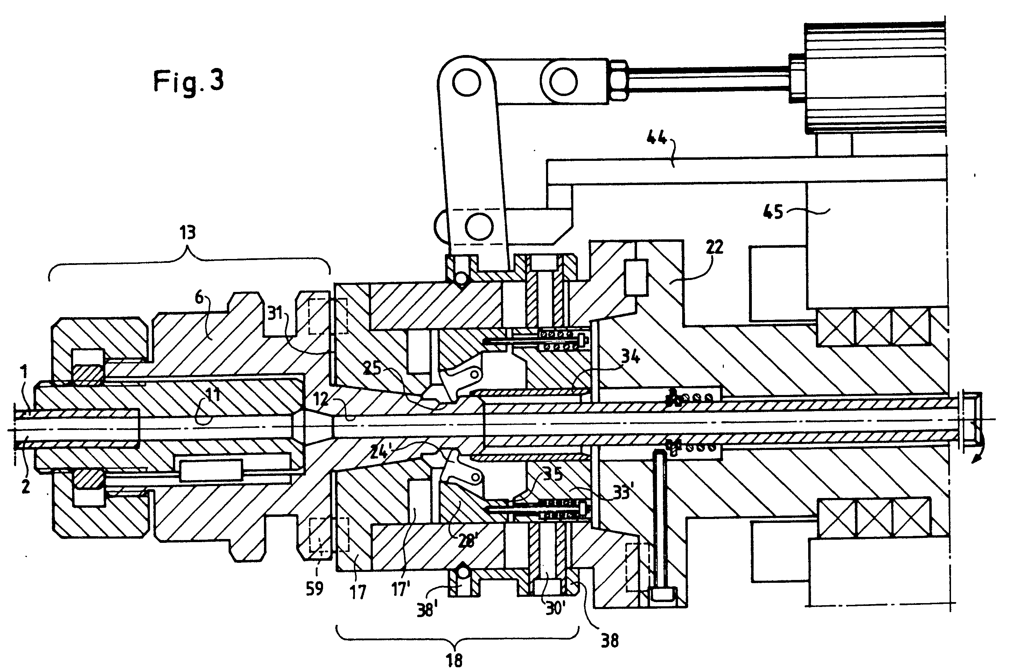

Beim zweiten Ausführungsbeispiel nach Figur 3 ist in jedes Keilstück 28' ein Stehbolzen 30' eingeschraubt. Die Stehbolzen 30' gehen durch die Schiebemuffe 33' und schleppen über eine Feder 31' die Keilstücke 28' mit, so dass jede Klaue 24' über Federkraft in der Nut 25 anliegt und damit die Werkzeugaufnahme 6 in den Aufnahmeteil 7 spannt. – Ansonsten sind in Figur 3 dieselben Teile mit denselben Bezugszeichen bezeichnet wie in Figur 1.

Zu ergänzen ist, dass in beiden Ausführungsbeispielen eine hydraulische Betätigung beschrieben wurde. Es ist jedoch auch eine pneumatische, mechanische, elektromotorische oder elektromagnetische Betätigung denkbar.

Ferner ist eine Modifikation der beschriebenen Ausführungsbeispiele in der Weise denkbar, dass die Betätigung der Schiebemuffe 33 über die Schaltmuffe 38 ersetzt wird durch eine Betätigung vom Spindelende her, etwa durch einen Stift, der in der Spindel axial verschiebbar angeordnet ist und in axialer Richtung auf die Schiebemuffe einwirkt, d.h. sie verschiebt.

Die Ausführungsbeispiele sind ferner im Hinblick auf das sog. BTA-Verfahren und das Einlippen-Bohrverfahren beschrieben, bei dem, wie erwähnt, der Kühlschmierstoff aussen am Umfang des Werkzeuges bzw. im Innern des Werkzeuges der Bohrstelle zugeführt und durch am Innenkanal 2 des Werkzeuges unter Mitnahme der Späne abgeführt wird. Die Erfindung ist jedoch auch beim sog. Ejektor-Bohrverfahren anwendbar, das auf einer Doppelrohrkonstruktion beruht.

Hinzuweisen ist schliesslich darauf, dass die Werkzeugaufnahme 6 nicht nur, wie beschrieben, mit einer kegeligen, sondern auch mit einer zylindrischen Aufnahme versehen sein kann.

## Patentansprüche

1. Werkzeugwechsler für eine Tiefbohrmaschine mit einer drehangetriebenen Werkzeugspindel und einem Aufnahmeteil (17), das eine konische Innenfläche (16) aufweist, in die der konische Schaft (15) einer zur Aufnahme eines Tiefbohrwerkzeugs (1) mit Innenkanal (2) bestimmten Werkzeugaufnahme (6) einsteckbar ist, und bei dem im Aufnahmeteil (17) Spanneinrichtungen vorgesehen sind, die am Schaft (15) der Werkzeugaufnahme (6) eingreifen und unter dem Druck einer Feder auf diese (6) in axialer Richtung einwirken, und bei der die Werkzeugaufnahme (6) sowie ein innerhalb der Werkzeugspindel (22) angeordnetes und sich mit dieser (22) mitdrehendes zur Zu- und Ableitung von Kühl- und/oder Schmiermittel dienendes Rohr (52) Innenkanäle (2, 11, 12; 58) aufweisen, die miteinander in Verbindung stehen, dadurch gekennzeichnet, dass die Spanneinrichtungen als im Aufnahmeteil (17) verschwenkbare und in eine Nut (15) am Schaft (15) der Werkzeugaufnahme (6) eingreifende Klauen (24) ausgebildet sind, die Schrägflächen (27) aufweisen und durch im Aufnahmeteil (17) axial verschiebbare Keile (28), die ebenfalls Schrägflächen (29) aufweisen, in Spannstellung gedrückt werden, wobei durch Anliegen der Schrägflächen (27, 29) aneinander eine Verriegelung durch Selbsthemmung eintritt, und dass jedem Keil (28) einzeln eine im Aufnahmeteil (17) abgestützte Feder (31) zugeordnet ist, und dass ferner das in der Werkzeugspindel (22) mitdrehend angeordnete Rohr (52) durch eine weitere Feder (56) gegen die Werkzeugaufnahme (6) gedrückt wird, und dass ferner eine Einrichtung (33, 34, 40–48) zum Lösen der Selbsthemmung der Keile (28) durch Verschiebung derselben in axialer Richtung gegen die Kraft der genannten Feder (31) vorgesehen ist.

2. Werkzeugwechsler nach Anspruch 1, dadurch gekennzeichnet, dass der Aufnahmeteil (17) entlang seines Umfangs Schlitze (17', 17'') aufweist, in denen die Klauen (24) und die Keile (28) verschwenkbar bzw. in axialer Richtung verschiebbar angeordnet sind.

3. Werkzeugwechsler nach Anspruch 1, dadurch gekennzeichnet, dass die Einrichtung zur Verschiebung der Keile (28) durch eine Schiebemuffe (33), die die Keile (28) in axialer Richtung verschiebt, und eine mit dieser (33) verbundene Hülse (34) gebildet wird, welche die Klauen (24) radial nach aussen verschwenkt und den Raum im Aufnahmeteil (17), den die Klauen (24) einnehmen, abdeckt.

4. Werkzeugwechsler nach Anspruch 3, dadurch gekennzeichnet, dass die Hülse (34) bei ihrer axialen Verschiebung auf die Werkzeugaufnahme (6) auftrifft und diese dadurch im Aufnahmeteil (17) löst.

5. Werkzeugwechsler nach Anspruch 3, dadurch gekennzeichnet, dass die Hülse (34) mit einer Schaltmuffe (38) gekoppelt ist, die durch einen hydraulischen, mechanischen, elektromotorischen, elektromagnetischen oder pneumatischen Antrieb (46) betätigt wird.

**Revendications**

1. Changeur d'outil pour machine de sondage avec broche d'outil à entraînement rotatif et partie réception (17), présentant une face interne conique (16) dans laquelle pourra venir s'encastrer l'arbre conique (15) du logement (13) de l'outil de sondage (1) à face interne (1) et pour lequel des dispositifs de tension sont prévus dans le réceptacle (17). Ces dispositifs viendront saisir l'arbre (15) du réceptacle de l'outil (6) en produisant un effet axial par pression d'un ressort. Le réceptacle de l'outil (6) ainsi qu'un tube (52) situé à l'intérieur de la broche (22) et tournant avec elle (22), assurant donc l'alimentation et l'évacuation de liquides réfrigérants et/ou lubrifiants présenteront des canaux internes (2, 11, 12, 58) reliés les uns aux autres caractérisés par le fait que les dispositifs de tension se composent de griffes (24) escamotables s'encastrant dans la partie réception (17) et d'une rainure de clavette (25) au niveau de l'arbre (15) du récpetacle de l'outil (6) et présentant des faces inclinées (27). Des cales (28) à déplacement axial dans la partie réception (17) qui présentent également des faces inclinées (29) presseront ces griffes en position de tension. Pour ce faire, les faces inclinées (27, 29) viendront l'une contre l'autre se verrouillant ainsi par autoblocage. Chaque cale (28) sera munie d'un ressort (31) monté dans la partie réception (17). En outre, le tube (52) situé à l'intérieur de la broche (22) à rotation synchrone viendra appuyer à l'aide d'un autre ressort (56) contre le réceptacle d'outil (6) et enfin un dispositif (33, 34, 40–48) permettra de desserrer le blocage des cales (28) en les déplaçant dans le sens de l'axe en direction opposée de la force exercée par les ressorts déjà cités (31).

2. Changeur d'outil selon la revendication 1, caractérisé par le fait que la partie réception (17) présente des fentes (17', 17'' sur son pourtour dans lesquelles les griffes (24) et les cales (28) pourront se déplacer dans le sens de l'axe.

3. Changeur d'outil selon la revendication 1, caractérisé par le fait que le dispositif de déplacement des cales (28) se compose d'un manchon coulissant (33) pouvant déplacer les cales (28) dans le sens de l'axe et d'une douille (34) reliée à ce manchon. Cette douille permettra d'écarter les griffes (24) vers l'extérieur et de recouvrir l'espace compris dans la partie réception (17) que les griffes (24) occupent.

4. Changeur d'outil selon la revendication 3, caractérisé par le fait que la douille (34) ira buter contre le réceptacle de l'outil (6) lors de son déplacement axial, le desserrant ainsi à l'intérieur de la partie réception (17).

5. Changeur d'outil selon la revendication 3, caractérisé par le fait que la douille (34) s'accouple avec un manchon d'embrayage (38) à entraînement (46) hydraulique, mécanique, électromotrice, électromagnétique ou pneumatique.

**Claims**

1. Tool changer for a deep drilling machine with a rotating driven tool spindel and a receiving member (17), which is provided with a conical interior surface (16), into which the conical shaft (15) of a tool receptacle (13) for receiving a deep drilling tool (1) can be inserted, said deep drilling tool being provided with an interior channel (2), and with which clamping means are provided within the receiving member (17) said clamping means engaging the shaft (15) of the tool receptacle (6) and acting on the same (6) under the pressure of a spring in axial direction, and with which the tool receptacle (6) and a tube (52) provided within and rotating with it (22) for the purpose of the supplying and leading off a cooling and/or lubricating medium, are provided with communicating interior channels (2, 11, 13; 58) characterized in that the clamping means are provided as claws (24) with inclined surfaces and priotable within the receiving member (17) and further projection into a groove (25) provided on the shaft (15) of the tool receptacle (6), said claws being pressed in their clamping position by wedges (28) which are axially moveably arranged within the receiving member (17) and which are also provided with inclined surfaces (29), such that by the mutual engagement of the afore-mentioned inclined surfaces (27, 29) upon each other the clamping position is maintained in a self-locking manner, and that each wedge (28) individually has a spring (31) assigned to it, which spring is supported within the receiving member (17), and in that, further, the tube (52) arranged within and rotating with the tool spindel (22) is pressed by a further spring (56) against the tool receptacle (6), and in that a device (33, 34, 40–48) is provided for disengaging the self-locking position of the wedges (28) by moving them in axial direction against the force of said spring (31).

2. Tool changer in accordance to claim 1, charactericed in that the receiving member (17) is provided along its circumference with slots (17', 17''), within which the claws (24) and the wedges (28) are provided in a manner, in which the claws are pivotable and the wedges are displaceable in axial direction.

3. Tool changer in acordance to claim 1, charactericed in that the means for displacing the wedges (28) are provided by a slideable bushing (33) displacing the wedges (28) in axial direction and by a sleeve (34) connected to the bushing (33), said sleeve pivoting said claws (24) radially outwardly and covering the space in the receiving member (17), within which the claws (24) are provided.

4. Tool changer in accordance to claim 3, characterized in that this sleeve (34), upon its axial displacement, hits the tool receptacle (6) and thereby loosens it within the receiving member (17).

5. Tool changer in accordance to claim 3, characterized in that the sleeve (34) is coupled to a switch gear (38) which is operated upon by a hydraulic, mechanic, electrical, electromagnetical or pneumatic drive means (46).

**Fig.1**

# Fig. 2

Fig. 3